Europäisches Patentamt

European Patent Office

Office européen des brevets

(19)

(11) EP 0 852 221 A2

(12) **EUROPÄISCHE PATENTANMELDUNG**

(43) Veröffentlichungstag:
08.07.1998 Patentblatt 1998/28

(51) Int Cl.6: **C02F 1/12**, C02F 1/14,
C02F 1/28

(21) Anmeldenummer: 97890251.8

(22) Anmeldetag: 18.12.1997

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 02.01.1997 AT 1/97

(71) Anmelder:
• Weinberger, Johann
4963 St. Peter/Hart (AT)
• M & P Machowetz & Partner Consulting
Ziviltechniker Gesellschaft mbH
4020 Linz (AT)

(72) Erfinder:
• Weinberger, Johann
4963 St. Peter/Hart (AT)
• M & P Machowetz & Partner Consulting
Ziviltechniker Gesellschaft mbH
4020 Linz (AT)

(74) Vertreter: Hübscher, Heiner, Dipl.-Ing. et al
Spittelwiese 7
4020 Linz (AT)

(54) **Verfahren zum Trocknen von Klärschlamm**

(57) Bei einem Verfahren zum Trocknen von Klärschlamm wird dieser mechanisch durch Pressen, Zentrifugieren od. dgl. vorentwässert und vor und/oder nach dem Vorentwässem mit Kalziumverbindungen versetzt. Um auf rationellste Weise höchste Trocknungsgrade zu erreichen, wird durch den vorentwässerten und mit einer Kalziumverbindung, vorzugsweise Branntkalk und/oder Kalkmilch, versetzten Klärschlamm kohlendioxidhaltiges Gas durchsickern gelassen, so daß das im Klärschlamm verteilte Kalziumhydroxid mit dem Kohlendioxidanteil des in den Klärschlamm eindringenden Gases vollständig karbonatisiert und das im Klärschlamm noch enthaltene und beim Karbonatisieren entstehende Wasser mit dem aus dem Klärschlamm wieder austretenden Gas als Trägermaterial abgefördert wird.

EP 0 852 221 A2

**Beschreibung**

Die Erfindung bezieht sich auf ein Verfahren zum Trocknen von Klärschlamn, bei dem Klärschlamm mechanisch durch Pressen, Zentrifugieren od. dgl. vorentwässert und vor und/oder nach dem Vorentwässern mit Kalziumverbindungen versetzt wird.

Unter Klärschlamm werden die aerob bzw. anaerob stabilisierten Reststoffe biologischer Abwasserreinigungsanlagen verstanden, welche Klärschlämne einen Feststoffgehalt von nur wenigen Vol.% aufweisen und aus über 90 Vol.% Wasser bestehen. Um Klärschlämme weiterverwendbar oder auch nur deponierbar zu machen, müssen sie auf einen Trockensubstanzgehalt von mehr als 30 % gebracht werden, wozu diese Klärschlämme unter Zugabe von Flockungsmitteln mechanisch entwässert, beispielsweise zentrifugiert und dann mit Branntkalk versetzt werden (DE 26 17 964 A, DE 31 28 673 C). Entwässerungen bis zu Trockensubstanzgehalten von über 40 % sind bisher kaum möglich, wenn die wärmetechnischen Behandlungsverfahren wegen ihres Energiebedarfes oder die chemischen Trocknungsverfahren wegen ihres hohen Fremdstoffbedarfes vermieden werden sollen. Ein mechanisches Entwässern ist durch die Ausbildung von Wasserzellen in den Schlammassen begrenzt, welche eingeschlossenen Zellen auch durch gesteigerte Druckbelastungen nicht mehr geöffnet werden können und zu einer Entwässerungsgrenze bei Trockensubstanzgehalten von ca. 35 bis 40 % führen.

Der Zusatz von Branntkalk zum Klärschlamm dient neben dem Trocknungseffekt auch zur Hygienisierung, wobei zur Unterbindung biologischer Aktivitäten ein hoher pH-Wert erforderlich ist. Um dann allerdings den Klärschlamm beispielsweise als Düngemittel einsetzen zu können, muß der pH-Wert wieder reduziert werden, wozu es ebenfalls bekannt ist, den getrockneten und pelletisierten Klärschlamm mit kohlendioxidhaltigem Gas durch ein Karbonatisieren zu neutralisieren (DE 31 28 673), was allerdings bisher keine Erhöhung des Trokkensubstanzgehaltes mit sich bringt.

Der Erfindung liegt daher die Aufgabe zugrunde, ein Verfahren der eingangs geschilderten Art anzugeben, das ein rationelles Klärschlammtrocknen unter Einsatz möglichst geringer Fremdsubstanzen und auf energiesparendste Weise bis zu höchsten Trockensubstanzgehalten erlaubt.

Die Erfindung löst diese Aufgabe dadurch, daß durch den vorentwässerten und mit einer Kalziumverbindung, vorzugsweise Branntkalk und/oder Kalkmilch, versetzten Klärschlamm kohlendioxidhaltiges Gas durchsickern gelassen wird, so daß das im Klärschlamm verteilte Kalziumhydroxid mit dem Kohlendioxidanteil des in den Klärschlamm eindringenden Gases vollständig karbonatisiert und das im Klärschlamm noch enthaltene und beim Karbonatisieren entstehende Wasser mit dem aus dem Klärschlamm wieder austretenden Gas als Trägermaterial abgefördert wird.

Die Erfindung nutzt die Erkenntnis, daß das Kalziumhydroxid durch Aufnahme von Kohlendioxid aus dem eindringenden Gas gemäß der Reaktionsgleichung

$$Ca\,(OH)_2 + CO_2 \rightarrow CaCO_3 + H_2O$$

langsam zu Kalziumkarbonat erhärtet, wobei einerseits das Kalziumkarbonat selbst die Trockenmasse erhöht und das Durchdringen des Klärschlamms mit Gas erleichtert und anderseits durch dieses Karbonatisieren die Struktur der bei der mechanischen Entwässerung entstandenen verkrusteten Wasserzellen innerhalb des Klärschlamms aufgebrochen wird, so daß das im Klärschlamm enthaltene Restwasser zusammen mit dem Reaktionswasser aus dem Karbonatisierungsvorgang von dem durch den Klärschlamm hindurchwandernden Gas als Trägermaterial aufgenommen und ausgebracht wird. Die Karbonatisierung des im Klärschlamm verteilten Kalziumhydroxids führt zu einer gasdurchlässigen Konsistenz des vorgetrockneten Klärschlammes, die ein mit einem Diffundiervorgang vergleichbares Ein- und Durchsickern des gasförmgien Trägermaterials erlaubt und damit den Abtransport der noch vorhandenen Feuchtigkeit ermöglicht. Das Gas darf dabei nur mit geringem Überdruck, beispielsweise 50 mbar, den Klärschlamm beaufschlagen, um keine kanalförmigen Durchströmwege, beispielsweise im Randbereich des Reaktionsbehälters, zu öffnen, da die solche Kanäle durchtrömende Luft die Feuchtigkeit aus dem Klärschlamm nicht im gewünschten Ausmaß aufnehmen und abtransportieren kann. Wie Versuchsreihen eindeutig bewiesen haben, führt das Karbonatisieren des Kalziumhydroxids innerhalb des Klärschlammes zu einer gesteigerten Porigkeit des Materials, die das Ein- und Durchdringen des Schlamms mit gasförmigem Medium erlaubt und somit einen höchstmöglichen Trocknungsgrad auf überraschend einfache Weise zu erreichen gewährleistet. Da das kohlendioxhältige Gas nur mit verhältnismäßig geringem Überdruck auf den Klärschlamm einwirken darf und der Trocknungsvorgang ohne zusätzliche äußere Wärmezufuhr oder mechanische Zerkleinerungen u. dgl. erfolgt, sind geringste Energiemengen für den Ventilatorbetrieb u. dgl. ausreichend, um in einfachen Reaktionsbehältern, die beispielsweise einen luftdurchlässigen Boden für die Gasbeaufschlagung aufweisen, die Durchführung des Trocknungsverfahrens zu ermöglichen, wozu noch kommt, daß durch die eingesetzten Kalziumverbindungen der gewünschte Hygienisierungs- und dann durch das Karbonatisieren auch ein Neutralisierungseffekt gleichzeitig mit dem Trocknungsvorgang gegeben ist.

Wird als Kalziumverbindung Branntkalk dem Klärschlamm zugegeben, verbessert sich der Trocknungsvorgang, da Branntkalk beim Löschen gemäß der Reaktionsgleichung

$$CaO + H_2O \rightarrow CaOH_2 + 15,3 \text{ kcal}$$

Wasser aus dem Klärschlamm aufnimmt und dabei zu einer Wärmeentwicklung führt, die neben einer Verdampfung von Feuchtigkeit vor allem auch zu einer weiteren Sterilisierung und Hygienisierung führt. Das entstehende Kalziumhydroxid wird dann beim nachfolgenden Beaufschlagen mit kohlendioxidhältigem Gas karbonatisiert und erbringt im Endeffekt wieder den entsprechenden Trocknungsgrad. In Abhängigkeit verschiedener Pararmeter, wie Menge der zugesetzten Kalziumverbindungen, Art und Dauer der Gasbeaufschlagung u. dgl. können so Trockensubstanzgehalte von über 90 % erreicht werden, wobei Reaktionszeiten bei der Gasbeaufschlagung des Schlammes von einigen Tagen genügen. Dabei wird zweckmäßigerweise auf eine maschinelle Entwässerung bzw. Vorentwässerung des Klärschlammes bis zu einem Trockensubstanzgehalt von 35 bis 40 % geachtet, was eine Gasdurchsickerung und damit einen raschen Fertigtrocknungsvorgang begünstigt und die Zugabe von Kalziumverbindungen braucht einen Mengenbereich zwischen 18 und 25 Vol.%, bezogen auf CaO und Trockensubstanz, nicht zu übersteigen. Mit den erreichbaren hohen Trockensubstanzgehalten kann das Volumen des vorentwässerten Klärschlammes um ca. 40 % und das Gewicht um ca. 50 % verringert werden und es entsteht ein hygienisiertes, trockenes, pH-neutrales und weitgehend geruchloses Produkt, das dementsprechend aufwandsarm transportiert, deponiert oder bevorratet und mit oder ohne Zusatzmittel als Düngemittel für die Landwirtschaft verwendet werden kann.

Vorteilhafterweise wird dem vorentwässerten Klärschlamm vor der Gasbeaufschlagung bereits getrockneter Klärschlamm zugemischt, so daß der Trockensubstanzanteil ohne Vergrößerung des Fremdmassenanteils erhöht wird, wodurch sich die Porösität und Luftdurchlässigkeit der Masse vergleichmäßigen und verbessern lassen und der Trocknungsvorgang beschleunigt abläuft. Dabei können zum Erreichen bester Ergebnisse zu trocknender Klärschlamm und trockener Klärschlamm bis zu einem Mengenverhältnis von 1: 1 ohne weiteres vermischt werden.

Zur Gasbeaufschlagung des Klärschlamms kann grundsätzlich jedes kohlendioxidhaltige Gas Verwendung finden, vorzugsweise werden allerdings Luft oder Abgase aus einem Verbrennungsprozeß verwendet, so daß keine eigenen Gasaufbereitungseinrichtungen erforderlich sind. Beim Einsatz von Umgebungsluft stehen etwa 0,03 Vol.% $CO_2$ für den Karbonatisierungsprozeß zur Verfügung und entsprechend größere Anteile an Feuchtigkeits-Trägermaterial, beim Einsatz von Abgasen aus einem Verbrennungsprozeß, beispielsweise einem Motor, sind mehr als 10 Vol.% $CO_2$ vorhanden, womit auch der Karbonatisierungsablauf entsprechend beeinflußbar ist. Selbstverständlich kann bei zu geringer Abgasmenge Umgebungsluft zugemischt und für eine geeignete Gasbeaufschlagung des Klärschlammes gesorgt werden.

An sich kann der karbonatisierte und getrocknete Klärschlamm auf verschiedenste Weise weiterverwertet werden, etwa durch eine Verbrennung mit oder ohne Zugabe von Hausmüll od. dgl., durch eine Verbrennung im Zuge einer Zementherstellung oder auch durch Verglasung, doch besonders vorteilhaft ist es, wenn das Trocknungsverfahren in einem biologischen Kreislauf eingebunden wird, bei dem das aus der Vorentwässerung anfallende Zentratwasser und die Abluft der Gasbeaufschlagung einer sauren Wäsche, beispielsweise unter Einsatz von Schwefelsäure, unterworfen werden und das Abfallprodukt dieser Wäsche, z. B. Diammonsulfat, mit getrocknetem Klärschlamm vermischt und die Mischung als Düngemittel für Ölfrüchte od. dgl. verwendet wird, wobei die Abgase eines biogas- oder pflanzenölbetriebenen Motors zur Gasbeaufschlagung des Klärschlammes genutzt werden. Dienen hier die mit dem entstehenden Düngemittel behandelten Ölfrüchte als Rohmaterial für den Brennstoff des Ölmotors und werden die beim Ölpressen entstehenden Preßkuchen in der Schweinemast od. dgl. weiterverarbeitet, ergibt sich praktisch ein geschlossener Kreislauf, der keine Rückbelastung durch Stickstoff und Phosphor aus der Schlammbehandlung mit sich bringt und zu einer hohen Wirtschaftlichkeit der Kläranlagen führt.

Testversuch:

Ausgefaulter Klärschlamm mit einem Trockensubstanzgehalt von 4,7% und dementsprechend 95,3% Wassergehalt wurde mit 11 kg Branntkalk/m$^3$ Faulschlamm (Anmerkung: Mittelbrand, t60Wert 4 bis 7 Minuten = Ablöschzeit) in einem Rührbehälter durchmischt und kurz vor Entritt in die Zentrifuge mit einem Polymermittel (ZETAG 78%FS40 = kationisches Copolymerisat aus Aminacrylat und Acrylamid dispergiert in raffiniertem hochreinem Mineralöl), und zwar 80 Liter-1%ige Polymerlösung/m$^3$ Faulschlamm versetzt. Bei einer Drehzahl von ca.: 3000 U/Min wurde der Trockensubstanzgehalt durch Zentrifugalkraft auf 37,5% und dementsprechend 62,5% Wassergehalt im Austrag aus der zentrifuge angehoben. Weiters wurde ein Standrohr aus PVC mit einem Durchmesser von 185 mm und einer Höhe von 1,5 m, mit einem Gemisch aus getrocknetem Klärschlamm, der aus vorhergehenden Versuchen stammte und einen Trockensubstanzgehalt von 91,9% (8,1% Wassergehalt) aufwies, und frisch abgepreßtem Klärschlamm mit einem Trockensubstanzgehalt von 37,5% (62,5% Wassergehalt s. o.) im Verhältnis 1 : 1 vermischt und bis auf eine Höhe von 1,5 m aufgefüllt. Der Trockensubstanzgehalt der Mischung wurde mit 71,5% gemessen. Die Vermischung wurde zur Verbesserung der Durchströmbarkeit des Reaktionsgutes bzw. zur Überwindung der "Leimigen Phase" durchgeführt. Das Standrohr war mit einem doppelten Boden (Höhe ca. 5 cm), in welchem sich 3 Einblasdüsen befanden, versehen. Über eine kleine Kompressoranlage wurde kontinuierlich komprimierte Umgebungsluft mit ca. 300 - 400 mbar über diese Düsen eingeblasen. Nach einwöchiger Versuchszeit wurde das Standrohr vollständig entleert, wobei sich herausstellte, daß das Material durchgehend getrocknet war. Der Trockensubstanzgehalt des Endproduktes lag sowohl bei kleineren als auch bei größeren Teilchen (Durchmesser von 1 mm - 3 cm) bei 93,5% (6,5% Wässergehalt). Der Verlauf der Volumensverminderung kann anhand der Veränderung der Füllstandshöhe im Laufe des Versuchszeitraumes dargestellt werden:

Füllstandshöhe am 1. Tag: 1,50 m
Füllstandshöhe am 2. Tag: 1,45 m
Füllstandshöhe am 3. Tag: 1,40 m
Füllstandshöhe am 4. Tag: 1,35 m
Füllstandshöhe am 5. Tag: 1,18 m
Füllstandshöhe am 6. Tag: 1,17 m
Füllstandshöhe am 7. Tag: 1,17 m

Die absolute Menge an Klärschlamm wurde lediglich durch den Zusatz von Branntkalk, nicht jedoch durch den Einsatz von getrocknetem Klärschlamm erhöht. Durch den Einsatz von getrocknetem Klärschlamm ist die Volumensverminderung zur Gänze dem frischgepreßten Klärschlamm zuzuordnen, d. h. die Hälfte des Standrohres war mit frischgepreßtem Klärschlamm mit einem Trockensubstanzgehalt von 37,5% und dementsprechend 62,5% Wässergehalt befüllt, was einer Füllstandshöhe von ca. 75 cm entspricht. Die Füllstandshöhe verminderte sich im Untersuchungszeitraum um ca. 33 cm. Werden beide Werte in ein Verhältnis zueinander gesetzt, so ergibt dies eine mindest 40%ige Volumensverminderung. Wird weiters der Anstieg der Trockensubstanz von 37,5% auf 93,5% betrachtet, so wurden mehr als 50% Wasser entfernt, was gleichzusetzen ist mit einer 50%igen Gewichtsverminderung.

Abschließend wurde eine geringe Menge des getrockneten Gutes in destilliertem Wasser aufgeschlämmt und der ph-Wert mit 8,3 gemessen.

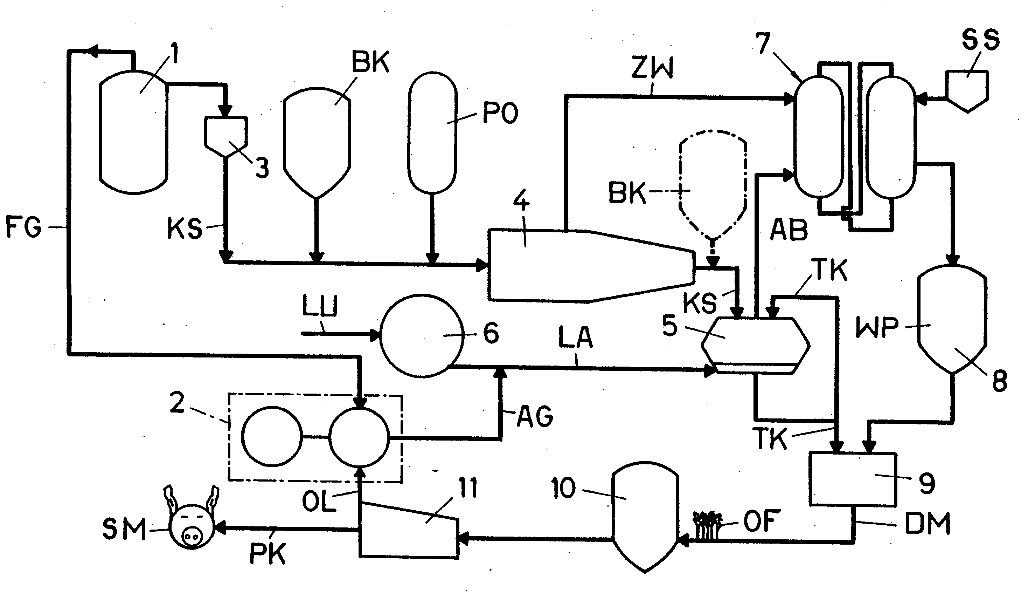

In der Zeichnung ist der Erfindungsgegenstand an Hand eines Verfahrensschemas näher veranschaulicht.

Anfallender Überschußschlamm wird maschinell, beispielsweise mittels eines Dekanters, von 0,3 bis 1,0 % Trockensubstanz auf ca. 8 % Trockensubstanz eingedickt und in einen Faulturm 1 eingebracht, wo ungefähr ein Drittel der Schlammtrockensubstanz in einer anaeroben Stufe als Faulgas abgebaut wird. Stickstoff und Phosphor werden dabei im wesentlichen in Form von Ammonium bzw. Phosphat rückgelöst und das Faulgas FG gelangt zur Strom- und Wärmegewinnung in ein Blockheizkraftwerk 2.

Eingedickter Überschußschlamm gelangt nun aus dem Faulturm 1 in einen Vorlagebehälter 3, aus welchem Vorlagebehälter Klärschlamm KS mit ca. 5 % TS in eine Zentrifuge 4 eingebracht wird, wobei vor und/oder nach dem Zentrifugieren dem Klärschlamm KS Branntkalk BK und ein Flockungshilfsmittel, vorzugsweise Polymere PO zugesetzt werden. In der Zentrifuge 4 wird der Klärschlamm bis zu Trockensubstanzgehalten von mehr als 35 % vorentwässert und der pH-Wert und die Temperatur steigen durch den Löschvorgang des Branntkalkes stark an.

Der vorentwässerte Klärschlamm KS gelangt anschließend in einen Reaktionsbehälter 5, in dem er mit bereits getrocknetem Klärschlamm TK vermischt und einer Beaufschlagung mit kohlendioxidhältigem Gas ausgesetzt wird. Als kohlendioxidhältiges Gas LA wird Luft LU und Abgas AG aus dem Kraftwerk 2 verwendet und ein Gebläse 6 sorgt für einen Beaufschlagungsüberdruck von ca. 500 mbar. Dadurch wird innerhalb des Reaktionsbehälters 5 das Kalziumhydroxid, das in der Mischung aus zu trocknendem und trockenen Klärschlamm KS + TK verteilt ist, mit dem Kohlendioxidgehalten des Beaufschlagungsgases karbonatisiert, wobei das durchsickernde Gas als Trägermaterial die im Schlamm enthaltene Feuchtigkeit und die Reaktionsfeuchtigkeit aus dem Karbonatisierungsprozeß aufnimmt und austrägt. Bei einer Mischung im Mengenverhältnis von 1 : 1 zwischen zu trocknendem Klärschlamm KS und trockenem Klärschlamm TK und einer Zumischung von ca. 25 Vol.% CaO werden bei einer Reaktionszeit von etwa einer Woche und einem Energieaufwand, der sich allein durch den Gebläsebetrieb ergibt, Trockensubstanzgehalte von mehr als 90 % erzielt.

Das aus der Zentrifuge 4 anfallende Zentratwasser ZW, das hohe $NH_4$-N-Gehalte und höhe $PO_4$-P-Konzentrationen aufweist, wird zur Vermeidung von Rückbelastungen der Kläranlage in eine Wascheinrichtung 7 geleitet, wo es zusammen mit der Abluft AB aus dem Reaktionsbehälter 5 durch eine saure Wäsche unter Zusatz von Schwefelsäure SS behandelt wird.

Das aus der Wascheinrichtung 7 anfallende Waschprodukt WP, beispielsweise Diammonsulfat $(NH_4)_2SO_4$, wird über einen Zwischenbehälter 8 in einem Mischer 9 dem getrockneten Klärschlamm TK zugemischt und es entsteht ein Düngemittel DM, das mit Ausnahme von Kalium den gesamten Nährstoffbedarf von Ölfrüchten OF, wie Raps, Lein, Soja, Sonnenblumen od. dgl. sowie anderen Feldfrüchten, wie Mais, abdeckt. Werden diese Ölfrüchte OF geerntet und nach entsprechender Trocknung und Lagerung in einem Lagerbehälter 10 einer Mühle 11 zum Kaltpressen zugeführt, läßt sich mit dem anfallenden unveresterten Öl OL Treibstoff für das Kraftwerk 2 gewinnen, und auch die anfallenden Preßkuchen TK können für die Schweinemast SM, ein Biomassekraftwerk od. dgl. weiterverwendet werden.

Es kommt zu einer ökologischen und ökonomischen Klärschlammverwertung, wobei das bei der Verbrennung von Biogas bzw. Pflanzenöl anfallende Kohlendioxid teilweise als Kalziumkarbonat im Klärschlamm gebunden wird. Außerdem wird beim Anbau von Raps und Verwendung von Diammonsulfat auch der Schwefelbedarf der Frucht abgedeckt. Darüber hinaus entstehen keine Rückbelastungen der Kläranlagen durch Stickstoff und Phosphor aus der Schlammbehandlung, womit sich die Baukosten der Kläranlage minimieren. Werden die einzelnen Verfahrensschritte entsprechend aufeinander abgestimmt, ist es möglich, die Klärschlamm-Gasbeaufschlagung ohne zusätzliche Energie vorzunehmen und einen autarken Schlammkreislauf zu erreichen, der nicht auf eine allgemeine landwirtschaftliche Entsorgung, Deponierung oder Verbrennung angewiesen ist.

schlammes genutzt werden.

**Patentansprüche**

1. Verfahren zum Trocknen von Klärschlamm, bei dem Klärschlamm mechanisch durch Pressen, Zentrifugieren od. dgl. vorentwässert und vor und/ oder nach dem Vorentwässern mit Kalziumverbindungen versetzt wird, dadurch gekennzeichnet, daß durch den vorentwässerten und mit einer Kalziumverbindung, vorzugsweise Branntkalk und/ oder Kalkmilch, versetzten Klärschlamm kohlendioxidhaltiges Gas durchsickern gelassen wird, so daß das im Klärschlamm verteilte Kalziumhydroxid mit dem Kohlendioxidanteil des in den Klärschlamm eindringenden Gases vollständig karbonatisiert und das im Klärschlamm noch enthaltene und beim Karbonatisieren entstehende Wasser mit dem aus dem Klärschlamm wieder austretenden Gas als Trägermaterial abgefördert wird.

2. Verfahren nach Anspruch 1, dadurch gekennzeichnet, daß Klärschlamm mit einem Trockensubstanzgehalt von ca. 30 bis 40 Vol.% gasbeaufschlagt wird.

3. Verfahren nach Anspruch 1 oder 2, dadurch gekennzeichnet, daß dem vorentwässerten Klärschlamm vor der Gasbeaufschlagung bereits getrockneter Klärschlamm zugemischt wird.

4. Verfahren nach einem der Ansprüche 1 bis 3, dadurch gekennzeichnet, daß als kohlendioxidhaltiges Gas Luft und/oder Abgase aus einem Verbrennungsprozeß verwendet werden.

5. Verfahren nach einem der Ansprüche 1 bis 4, gekennzeichnet durch seine Einbindung in einen biologischen Kreislauf, bei dem das aus der Vorentwässerung anfallende Zentratwasser und die Abluft der Gasbeaufschlagung einer sauren Wäsche, beispielsweise unter Einsatz von Schwefelsäure, unterworfen werden und das Abfallprodukt dieser Wäsche, z. B. Diammonsulfat, mit getrocknetem Klärschlamm vermischt und die Mischung als Düngemittel für Ölfrüchte od. dgl. verwendet wird, wobei die Abgase eines biogas- oder pflanzenölbetriebenen Motors zur Gasbeaufschlagung des Klär-